# EUROPÄISCHE PATENTSCHRIFT

(11) **EP 1 416 288 B1**
(45) Veröffentlichungstag und Bekanntmachung des Hinweises auf die Patenterteilung: **02.03.2005**
(21) Anmeldenummer: 02023566.9
(22) Anmeldetag: 23.10.2002
(51) Int. Cl.: G01R 31/26, G01N 21/66, G01N 21/95

(54) **Verfahren und Anordnung zur optischen Detektion mechanischer Defekte in Halbleiter-Bauelementen, insbesondere in Solarzellen-Anordnungen**
Method and apparatus for optical detection of mechanical defects in semiconductor components, in particular solar cell arrangements
Procédé et dispositif de détection optique des défauts mécaniques dans des dispositifs à semi-conducteur, notamment pour systèmes de cellules solaires

(43) Veröffentlichungstag der Anmeldung: 06.05.2004
(73) Patentinhaber: EADS Astrium GmbH, 81663 München (DE)
(72) Erfinder: Zimmermann, Claus, Dr., 81371 München (DE); Dettlaff, Klaus, 85604 Zorneding (DE)
(74) Vertreter: Ulrich, Thomas

(56) Entgegenhaltungen:
- US-A- 5 006 717
- US-B1- 6 225 640
- HONSBERG C ET AL: "LIGHT EMISSION AS A STABILITY PREDICTOR FOR GAAS SOLAR CELLS" PHOTOVOLTAIC SPECIALISTS CONFERENCE. NEW ORLEANS, MAY 4 - 8, 1987, NEW YORK, IEEE, US, Bd. CONF. 19, 4. Mai 1987 (1987-05-04), Seiten 1150-1155, XP000044686
- HONSBERG C ET AL: "Light emission as a solar cell analysis technique" SOLAR CELLS, FEB. 1987, SWITZERLAND, Bd. 20, Nr. 1, Seiten 59-63, XP001109755 ISSN: 0379-6787

## Beschreibung

Die vorliegende Erfindung betrifft ein Verfahren zur Detektion von Defekten in Halbleiter-Bauelementen, insbesondere in Solarzellen-Anordnungen. Die Erfindung betrifft dabei Halbleiter-Bauelemente mit zumindest einem pn-Übergang und zumindest einer Halbleiterschicht aus einem Halbleitermaterial mit direktem Bandübergang. Drei Beispiele für diese Familie von Halbleiter-Materialien sind GaAs, GaInAs oder GaInP, die Erfindung betrifft jedoch alle Halbleiter-Materialien dieser Familie.

Aus DE 42 07 592 wie auch aus US 5,334,844 sind optische Testverfahren für Halbleiter-Bauelemente, speziell für Solarzellen-Anordnungen bekannt. Es wird dabei das entsprechende Bauelement mit Hilfe einer Strahlungsquelle bestrahlt und die vom Bauelement reflektierte Strahlung optisch erfasst und ausgewertet. Dadurch können insbesondere Unregelmäßigkeiten oder Unebenheiten in den Halbleiterschichten des Bauelements detektiert werden.

Nachteilig an solchen Verfahren ist, dass zwar gewisse sichtbare Unregelmäßgkeiten in den Bauelementen detektiert werden können, jedoch keinerlei Aussage über die technische Funktionsfähigkeit der Bauelemente getroffen werden kann, da aus einer Unregelmäßigkeit nicht automatisch auf eine fehlende Funktionsfähigkeit geschlossen werden kann. Umgekehrt bleiben Fehler in der Funktionsfähigkeit des Bauelements unentdeckt, die sich nicht oder nur bedingt in sichtbaren Unregelmäßigkeiten aufgrund einer rein passiven Bestrahlung der Halbleiter-Bauelemente manifestieren. Ein weiterer Nachteil ist, dass diese Verfahren nur eine rein oberflächliche Untersuchung der Halbleiter-Bauelemente erlauben, Aussagen über die Beschaffenheit tieferer Schichten sind nicht möglich.

Die US 6,225,640 betrifft ein Verfahren zur Beseitigung von elektrischen Defekten in Halbleiter-Bauelementen, welche dazu in der Lage sind, aktiv elektromagnetische Strahlung auszusenden. Es wird zunächst die elektrische Leistungsfähigkeit des Halbleiter-Bauelements gemessen. Anschließend wird an das Halbleiter-Bauelement eine Spannung in Durchlassrichtung angelegt, wodurch das Bauelement aktiv elektromagnetische Strahlung aussendet. Es wird dann diese elektromagnetische Strahlung mit Hilfe eines optischen Detektors erfasst und es werden Helligkeitskontraste in Form von dunklen Flecken in dem untersuchten Bereich ermittelt. Diesen Helligkeitskontrasten werden dann elektrische Defekte zugeordnet. Es wird außerdem ein Filterschritt vorgesehen, mit dem bei Halbleiter-Bauelementen mit mehreren Schichten, die jeweils eine andere Wellenlänge ausstrahlen, jede dieser Schichten individuell auf elektrische Defekte untersucht werden kann. Dann wird der detektierte elektrische Defekt mechanisch beseitigt. Als letzter Schritt wird dann erneut die elektrische Leistungsfähigkeit des Halbleiter-Bauelements gemessen. Eine Anwendung des Verfahrens betrifft Multi Junction Solarzellen.

US 5,006,717 beschreibt ein Verfahren und eine Anordnung zur Auswertung der Lebensdauer eines Halbleiter-Bauelements. Dabei wird die Lumineszenz-Strahlung einer vorbestimmten Wellenlänge detektiert, die von dem Halbleiter-Bauelement emittiert wird. Diese Lumineszenz-Wellenlänge ist mit der elektrischen Degradation des Halbleiter-Baulements durch "heisse Ladungsträger" (hot carriers) korreliert. Es wird dabei das Lumineszenzbild erfasst und ausgewertet, um den Ort der Degradation zu ermitteln.

C. Honsberg et al. "Light emission as a stability predictor for GaAs solar cells", The conference record of the Nineteenth IEEE Photovoltaic Specialists Conference, New Orleans, May 4-8, 1987, Seiten 1150 - 1155 beschreibt ein Testverfahren zur Vorhersage der Stabilität von GaAs-Solarzellen, welches auf Lichtemission basiert und welches zur Identifizierung von elektrische Defekten (Shunts) in der Solarzelle dient. Die Solarzelle wird dabei in Durchlassrichtung betrieben und zum Leuchten angeregt, das Strahlungsbild der Solarzelle wird erfasst und es werden insbesondere zusätzlich elektrische Zellparameter ermittelt.

Wie beschrieben deckt die US 6,225,640 nur die Detektion und Beseitigung elektrischer Defekte ab. Auch der weitere Stand der Technik betrifft nur die Detektion elektrischer Defekte. Die Defekte im Sinne von US 6,225,640 entstehen aufgrund von Wachstumsstörungen während des Herstellungsprozeß des Halbleiterbauelements. Eine zweite Klasse von Defekten, die insbesondere bei der Weiterverarbeitung von Halbleiterbauelementen von Bedeutung sind, sind mechanische Defekte. Dabei handelt es sich um eine fundamental andere Defektklasse, da sie die physikalische Integrität des Halbleiterbauelements beeinträchtigen, aber nicht notwendigerweise elektrische Auswirkungen haben müssen. Ihre Detektion ist dennoch von großem Interesse, da sie sich möglicherweise für den Benutzter trotzdem störend auswirken oder bei längerem Betrieb des Bauelements zu späterer Zeit zu einer Schädigung des Bauelements führen können. Es können also bei Halbleiter-Bauelementen auch andere Defekte wie insbesondere mechanische Defekte oder auch Eintrübungen von Schichten oder ähnliches auftreten, die nicht unbedingt unmittelbar die elektrische Leistungsfähigkeit des Bauelementsbeeinträchtigen. Auch können mit dem Verfahren nach dem Stand der Technik nur Defekte in unmittelbar strahlungsaktiven Halbleiterschichten ermittelt werden, also in solchen Schichten, die selbst aktiv elektromagnetische Strahlung emittieren können, wenn eine entsprechende Spannung an sie angelegt wird.

Aufgabe der vorliegenden Erfindung ist es, eine Möglichkeit zur Detektion von Defekten in Halbleiter-Bauelementen, beispielsweise in Solarzellen-Anordnungen, bereitzustellen, die die Ermittlung anderer Arten von Defekten ermöglicht.

Diese Aufgabe wird gelöst durch die Merkmale der Patentansprüche 1, 6 und 12.

Ein erster Gegenstand der Erfindung ist ein Verfahren zur Detektion von Defekten in einem Halbleiter-Bauelement mit zumindest einem pn-Übergang und zumindest einer Halbleiterschicht aus einem Halbleitermaterial mit direktem Bandübergang, wobei an den zumindest einen pn-Übergang eine Spannung zum Betrieb des pn-Überganges in Durchlassrichtung angelegt wird, und das durch die angelegte Spannung erzeugte Strahlungsverhalten der Halbleiterschicht zumindest für Teilbereiche der Halbleiterschicht optisch erfasst und ausgewertet wird. Unter optischer Erfassung im Sinne dieses Gegenstandes der Erfindung ist im Folgenden die ortsaufgelöste Detektion der vom Halbleiterbauelement emittierten elektromagnetischen Strahlung zu verstehen, wobei diese Strahlung auch außerhalb des sichtbaren Spektralbereiches liegen kann. Gemäß der Erfindung ist vorgesehen, dass das Strahlungsverhalten der Halbleiterschicht automatisch auf abrupte, eindimensional ausgedehnte Intensitätsänderungen längs der Halbleiterschicht untersucht wird und detektierte Intensitätsänderungen als mechanische Defekte des Halbleiter-Bauelements gekennzeichnet werden.

Man erhält durch dieses Verfahren die Möglichkeit für einen optischen Test der Funktionsfähigkeit des Halbleiter-Bauelements, wobei jedoch im Gegensatz zum oben zuerst genannten Stand der Technik das Bauelement nicht passiv bestrahlt wird, sondern vielmehr aktiv das Strahlungsverhalten des Bauelements selbst angelegt wird. Dies wird bei Halbleitern mit direktem Bandübergang dadurch erzielt, dass eine Spannung in Durchlassrichtung an pn-Übergänge in diesem Halbleiter angelegt wird. Die induzierten Ladungsträger können dann an dem direkten Bandübergang strahlend rekombinieren.

Die Analyse des Strahlungsverhaltens erfolgt bei diesem Gegenstand der Erfindung derart, dass das Strahlungsverhalten der Halbleiterschicht auf abrupte, eindimensionale Intensitätsänderungen längs der Halbleiterschicht untersucht wird. Eine solche Analyse kann automatisch durch entsprechende Bildverarbeitungssysteme oder Strahlungsintensitätsdetektoren erfolgen. Es wird also hier nicht lediglich qualitativ das globale Strahlungsverhalten betrachtet (Strahlung vorhanden oder nicht vorhanden), sondern es wird lokal der Intensitätsverlauf des Strahlungsverhaltens entlang des Bauelements bzw. entlang der Halbleiterschicht mit direktem Bandübergang untersucht. Auf diese Weise können lokale Defekte erkannt werden, die die Funktionsfähigkeit des Bauelements in gewissen Teilbereichen beeinträchtigen oder in sonstiger Weise stören können. Eine abrupte, eindimensional ausgedehnte Intensitätsänderung lässt auf einen mechanischen Defekt wie einen Bruch einer Halbleiterschicht schließen.

Grundsätzlich kann das Verfahren aber auch angewendet werden, um lokale Eintrübungen, Degradationen oder ähnliches, beispielsweise in Deckgläsern oder Deckschichten von Solarzellen, oder ähnliches zu detektieren. Diese können sich dann aber beispielsweise als Intensitätisänderung zweidimensionaler Ausdehnung im Strahlungsverhalten auswirken und entsprechend detektierbar sein.

Eine oben genannte Detektion mechanischer Defekte kann unmittelbar für strahlungsaktiven Halbleiterschichen erfolgen. Es kann aber auch eine indirekte Detektion mechanischer Defekte einer strahlungsinaktiven Schicht des Halbleiter-Bauelements erfolgen. Dabei wird das Strahlungsverhalten einer benachbarten strahlungsaktiven Halbleiterschicht automatisch auf abrupte, eindimensional ausgedehnte Intensitätsänderungen längs der Halbleiterschicht untersucht und detektierte Intensitätsänderungen werden als mechanische Defekte der benachbarten strahlungsinaktiven Schicht des Halbleiter-Bauelements gekennzeichnet. Dies gilt insbesondere, wenn mehrere Halbleiterschichten epitaktisch aufeinander aufgewachsen wurden und damit eine einheitliche Kristallausrichtung der einzelnen Schichten vorliegt. Dann kann aus dem Strahlungsverhalten einer strahlungsaktiven Schicht und der dort eventuell detektierten mechanischen Defekte auf mechanische Defekte einer benachbarten strahlungsinaktiven Schicht geschlossen werden.

Eine Weiterbildung des ersten Gegenstandes der Erfindung sieht vor, dass eine kombinierte Detektion von mechanischen Defekten und Erfassung der elektrischen Auswirkungen der mechanischen Defekte erfolgt. Dabei wird eine Analyse des Strahlungsverhaltens des Bauelements in einem ersten Wellenlängenbereich der Detektion mechanischer Defekte und eine Analyse des Strahlungsverhaltens des Bauelements in einem zweiten Wellenlängenbereich der Erfassung der elektrischen Auswirkungen zu Grunde gelegt. Die Analyse des Strahlungsverhaltens des Bauelements in einem ersten Wellenlängenbereich erfolgt dabei wie bereits beschrieben mit Hinblick auf eindimensionale Intensitätsänderungen. Die Analyse des Strahlungsverhaltens des Bauelements in einem zweiten Wellenlängenbereich kann dagegen beispielsweise derart erfolgen, dass das Strahlungsverhalten gesamter Teilbereiche oder auch das Integral über die Strahlungsintensität gesamter Teilbereiche oder einer ganzen Schicht ermittelt wird. Es kann beispielsweise aufgrund einer gleichmäßige Strahlungsintensität oder aus einem großen Wert für das Integral in einem bestimmten Bereich auf eine gute elektrische Funktionsfähigkeit der Halbleiterschicht und insbesondere des pn-Überganges oder der pn-Übergänge in diesem Bereich geschlossen werden, so dass mechanische Defekte identifiziert werden können, die keine elektrischen Auswirkungen haben. Eine anormale Strahlungsintensität in dem zweiten Wellenlängenbereich, insbesondere gekoppelt mit einer signifikanten Änderung der Intensität längs der Halbleiterschicht, lässt dagegen auf erhebliche Auswirkungen gewisser mechanischen Defekte schließen.

Um speziell das elektrische Verhalten einer bestimmten Halbleiterschicht mit direktem Bandübergang zu untersuchen und um eventuell störende sonstige Strahlungseinflüsse zu minimieren, kann vorgesehen werden, dass mittels einer Filteranordnung diejenige Wellenlänge aus dem Strahlungsspektrum herausgefiltert wird, deren Energie dem direkten Bandübergang der besagten Halbleiterschicht entspricht. Diese Wellenlänge entspricht dann genau der emittierten Strahlung der Halbleiterschicht, die durch die strahlende Rekombination der Ladungsträger am direkten Bandübergang der Halbleiterschicht erzeugt wird. Es kann damit vorgesehen werden, dass das Strahlungsverhalten einer ersten Halbleiterschicht mit zumindest einem pn-Übergang zur Detektion mechanischer Defekte und das Strahlungsverhalten einer zweiten Halbleiterschicht mit zumindest einem pn-Übergang zur Erfassung der elektrischen Auswirkungen der mechanischen Defekte verwendet wird. Es werden dabei mittels einer Filteranordnung jeweils diejenigen Wellenlängen aus dem Strahlungsspektrum herausgefiltert, deren Energie dem direkten Bandübergang der jeweilgen Halbleiterschicht entspricht.

Wenn ein Test eines Halbleiter-Bauelements mit mehreren pn-Übergängen und zumindest zwei Halbleiterschichten aus verschiedenen Halbleitermaterialien mit direktem Bandübergang nach dem vorstehend beschriebenen Verfahren durchgeführt werden soll, so wird an die pn-Übergänge eine Spannung zum Betrieb der pn-Übergänge in Durchlassrichtung angelegt und jeweils mittels einer Filteranordnung pro Halbleiterschicht mit direktem Bandübergang diejenige Wellenlänge aus dem Strahlungsspektrum herausgefiltert, deren Energie dem direkten Bandübergang der jeweiligen Halbleiterschicht entspricht. Es können also grundsätzlich pn-Übergänge in unterschiedlichen Halbleiterschichten mit direktem Bandübergang, insbesondere aus unterschiedlichen Materialien mit direktem Bandübergang, in einem Bauelement vorliegen, wobei deren pn-Übergänge prinzipiell parallel oder in Serie geschaltet sein können. Es ist dann die anzulegende Spannung jeweils so zu wählen, dass entweder die pn-Übergänge der gewünschten Halbleiterschicht oder aller Halbleiterschichten gleichzeitig in Durchlassrichtung betrieben werden.

Weiterhin kann vorgesehen werden, dass eine Mehrzahl von n Halbleiter-Bauelementen in einer Serienschaltung auf einem gemeinsamen Bauelemente-Träger angeordnet wird und an die Gesamtheit der Halbleiter-Bauelemente eine Spannung angelegt wird, die dem n-fachen der Spannung zum Betrieb eines Bauelementes in Durchlassrichtung entspricht. So können z.B. eine Mehrzahl von Solarzellen zu einem Modul oder einem String zusammengefasst werden und dieses Modul oder dieser String als Grundelement zum Aufbau größerer Einheiten wie z.B. Solargeneratoren oder Solarpanels verwendet werden. Anstatt nun jede einzelne Solarzelle zu vermessen, kann dann ein ganzes Modul oder ein ganzer String in einem Arbeitsschritt vermessen werden. Analoges gilt für andere Arten von Halbleiter-Bauelementen.

Eine spezielle Anwendung der vorgenannten Erfindung wäre ein Verfahren zum Test einer Solarzellen-Anordnung mit zumindest einem pn-Übergang und zumindest einer Halbleiterschicht aus einem Halbleitermaterial mit direktem Bandübergang. Es kann dann an den zumindest einen pn-Übergang eine Spannung zum Betrieb des pn-Überganges in Durchlassrichtung angelegt werden, und wie beschrieben kann das durch die angelegte Spannung erzeugte Strahlungsverhalten der Halbleiterschicht zumindest für Teilbereiche der Halbleiterschicht optisch erfasst und ausgewertet werden. Die Vorteile eines solchen Verfahrens entsprechen denen, die bereits vorstehend im Rahmen von allgemeinen Halbleiter-Bauelementen ausgeführt wurden. Solarzellen sind üblicherweise dafür ausgelegt, durch Absorption von Strahlung Ladungsträger zu generieren. Hierfür können verschiedene Halbleitermaterialien in der Solarzellen-Anordnung verwendet werden, insbesondere solche mit direktem oder mit indirektem Bandübergang. Im Fall der vorliegenden Erfindung wird jedoch gerade der umgekehrte Effekt verwendet, der bei Halbleitern mit direktem Bandübergang realisiert werden kann. Es werden durch Anlegen einer Spannung diejenigen Halbleiterschichten der Solarzellen-Anordnung zur Emission von Strahlung angeregt, die einen direkten Bandüber gang aufweisen. Damit wird ein einfacher, effektiver und weitgehend eindeutiger Test der Funktionsfähigkeit der Solarzellen-Anordnung - analog zum bereits beschriebenen Test allgemeiner Halbleiter-Bauelemente - möglich, im Gegensatz zu den deutlich unsichereren und aufwändigeren Verfahren aus dem Stand der Technik.

Ein weiterer Gegenstand der vorliegenden Erfindung umfasst eine Verwendung eines Verfahrens, bei dem
- an zumindest einen pn-Übergang eines Halbleiter-Bauelements eine Spannung zum Betrieb des pn-Überganges in Durchlassrichtung angelegt wird, und
- das durch die angelegte Spannung erzeugte Strahlungsverhalten der Halbleiterschicht zumindest für Teilbereiche der Halbleiterschicht automatisch optisch erfasst und ausgewertet wird. Die spezielle Verwendung dieses Verfahrens im Rahmen der Erfindung betrifft eine Verwendung zur Detektion mechanischer Defekte des Halbleiter-Bauelements.

Im Rahmen dieser speziellen Verwendung des Verfahrens wird vorgesehen, dass das Strahlungsverhalten der Halbleiterschicht automatisch auf abrupte, eindimensional ausgedehnte Intensitätsänderungen längs der Halbleiterschicht untersucht wird und detektierte Intensitätsänderungen als mechanische Defekte des Halbleiter-Bauelements gekennzeichnet werden.

Weiterhin kann im Rahmen dieser speziellen Verwendung vorgesehen werden, dass eine indirekte Detektion mechanischer Defekte einer strahlungsinaktiven Schicht des Halbleiter-Bauelements erfolgt, wobei das Strahlungsverhalten einer benachbarten strahlungsaktiven Halbleiterschicht automatisch auf abrupte, eindimensional ausgedehnte Intensitätsänderungen längs der Halbleiterschicht untersucht wird und detektierte Intensitätsänderungen als mechanische Defekte der strahlungsinaktiven Schicht des Halbleiter-Bauelements gekennzeichnet werden.

Weiterhin kann auch im Rahmen der speziellen Verwendung des Verfahrens vorgesehen werden, dass eine kombinierte Detektion von mechanischen Defekten und Erfassung der elektrischen Auswirkungen der mechanischen Defekte erfolgt, wobei eine Analyse des Strahlungsverhaltens des Bauelements in einem ersten Wellenlängenbereich der Detektion mechanischer Defekte und eine Analyse des Strahlungsverhaltens des Bauelements in einem zweiten Wellenlängenbereich der Erfassung der elektrischen Auswirkungen zu Grunde gelegt wird.

Das genannte Verfahren kann insbesondere dazu verwendet werden, das Strahlungsverhalten einer ersten Halbleiterschicht mit zumindest einem pn-Übergang zur Detektion mechanischer Defekte und das Strahlungsverhalten einer zweiten Halbleiterschicht mit zumindest einem pn-Übergang zur Erfassung der elektrischen Auswirkungen der mechanischen Defekte zu verwenden, wobei mittels einer Filteranordnung jeweils diejenigen Wellenlängen aus dem Strahlungsspektrum herausgefiltert werden, deren Energie dem direkten Bandübergang der jeweilgen Halbleiterschicht entspricht.

Im Rahmen der genannten speziellen Verwendung kann außerdem vorgesehen werden, dass eine Mehrzahl von n Halbleiter-Bauelementen in einer Serienschaltung auf einem gemeinsamen Bauelemente-Träger angeordnet wird und an die Gesamtheit der Halbleiter-Bauelemente eine Spannung angelegt wird, die dem n-fachen der Spannung zum Betrieb eines Bauelementes in Durchlassrichtung entspricht.

Die vorgenannte spezielle Verwendung kann insbesondere zur Detektion mechanischer Defekte von Solarzellen-Anordnungen Anwendung finden.

Ein weiterer Gegenstand der vorliegenden Erfindung ist eine Anordnung zur Detektion mechanischer Defekte eines Halbleiter-Bauelements, insbesondere von Solarzellen-Anordnungen. Es werden dabei Halbleiter-Bauelemente betrachtet mit zumindest einem pn-Übergang und zumindest einer Halbleiterschicht aus einem Halbleitermaterial mit direktem Bandübergang und mindestens einer Elektrode, die mit dem p-leitenden Bereich des Halbleiter-Bauelements verbunden ist und mindestens einer Elektrode, die mit dem n-leitenden Bereich des Halbleiter-Bauelements verbunden ist. Die Anordnung weist dabei folgendes auf:
- eine Spannungsversorgung, die mit den Elektroden des Halbleiter-Bauelements verbindbar ist und zum Betrieb des pn-Überganges in Durchlassrichtung ausgelegt ist, und
- eine Einrichtung zur optischen Erfassung und Auswertung des durch die angelegte Spannung erzeugte Strahlungsverhalten der Halbleiterschicht zumindest für Teilbereiche der Halbleiterschicht.

Gemäß der Erfindung weist die Anordnung außerdem foldendes auf:
- einen ersten Bilddaten-Speicherbereich zur Speicherung eines Strahlungsbildes einer ersten Halbleiterschicht
- einen zweiten Bilddaten-Speicherbereich zur Speicherung eines Strahlungsbildes einer zweiten Halbleiterschicht,
- einen ersten Programm-Speicherbereich enthaltend ein Bildverarbeitungsprogramm, ausgebildet zur automatischen Untersuchung mindestens eines der Strahlungsbilder auf abrupte, eindimensional ausgedehnte Intensitätsänderungen und zur Kennzeichnung der detektierten Intensitätsänderungen als mechanische Defekte des Halbleiter-Bauelements und
- einen zweiten Programm-Speicherbereich enthaltend ein Programm zur Analyse mindestens eines der Strahlungsbilder auf elektrische Auswirkungen der mechanischen Defekte.

Die Einrichtung zur optischen Erfassung und Auswertung kann insbesondere durch mindestens ein Bildverarbeitungssystem oder einen oder mehrere Strahlungsintensitätsdetektoren realisiert werden. Durch eine solche Anordnung kann das aktive Strahlungsverhalten der entsprechenden Halbleiterschichten angeregt werden und es können durch die geeigneten Einrichtungen die möglichen Defekte in den Halbleiterschichten auf einfache Weise optisch ermittelt werden.

Um gezielt das Strahlungsverhalten einer Halbleiterschicht mit direktem Bandübergang unter möglichst weitgehender Minimierung von möglichen Störeffekten durchführen zu können, wird eine Filteranordnung vorgesehen zur Herausfilterung derjenigen Wellenlänge aus dem Strahlungsspektrum, deren Energie dem direkten Bandübergang der Halbleiterschicht entspricht.

Soll eine vorstehend beschriebene Testanordnung speziell zur Detektion mechanischer Effekte eines Halbleiter-Bauelements mit mehreren pn-Übergängen und zumindest zwei Halbleiterschichten aus verschiedenen Halbleitermaterialien mit direktem Bandübergang eingesetzt werden, so kann dies dadurch erreicht werden, dass jeweils eine Filteranordnung pro Halbleiterschicht mit direktem Bandübergang vorgesehen ist zur Herausfilterung derjenigen Wellenlänge aus dem Strahlungsspektrum, deren Energie dem direkten Bandübergang der jeweiligen Halbleiterschicht entspricht.

Gegenstand des erfindungsgemäßen Verfahrens sowie der erfindungsgemäßen Verwendung ist auch die Detektion von Defekten in einem Halbleiter-Bauelement mit zumindest einem pn-Übergang und zumindest einer Halbleiterschicht aus einem Halbleitermaterial mit direktem Bandübergang, wobei an den zumindest einen pn-Übergang eine Spannung zum Betrieb des pn-Überganges in Durchlassrichtung angelegt wird, und das durch die angelegte Spannung erzeugte Strahlungsverhalten der Halbleiterschicht zumindest für Teilbereiche der Halbleiterschicht optisch erfasst und ausgewertet wird. Dabei ist vorgesehen, dass automatisch das Integral über die Strahlungsintensität zumindest eines ersten Teilbereichs einer ersten Halbleiterschicht bestimmt wird, anschließend das Integral über die Strahlungsintensität zumindest eines Vergleichsbereichs derselben Halbleiterschicht oder einer zweiten Halbleiterschicht bestimmt wird und aufgrund des Ergebnisses eines automatischen Vergleichs der beiden Integrale der erste. Teilbe reich als defekt oder als defektfrei gekennzeichnet wird. Der Vergleichsbreich kann entweder zeitgleich oder zeitnah vermessen werden, es können aber auch bereits zu einem deutlich früheren Zeitpunkt gemessene und gespeicherte Daten für den Vergleich herangezogen werden.

Ein spezielles Ausführungsbeispiel der vorliegenden Erfindung wird nachfolgend anhand der Fig. 1 bis 6 anhand von Multi Junction Solarzellen erläutert.

Es zeigen:
- Fig. 1:: Schematische Darstellung des optischen Tests einer Triple Junction Solarzellen-Anordnung,
- Fig. 2:: Schematische Darstellung der Intensitätsverteilung entlang einer Halbleiterschicht mit Defekten,
- Fig. 3:: Spektrale Emfpfindlichkeit einer Triple Juncion Solarzellen-Anordnung,
- Fig. 4:: Schematische Darstellung der Intensitätsverteilung entlang zweier Solarzellen einer Triple Junction Solarzellen-Anordnung bei jeweils verschiedenen Wellenlängen
- Fig. 5:: Schematische Darstellung mehrerer Solarzellen-Anordnung, zusammengefasst zu einem String
- Fig. 6:: Schematische Darstellung einer Bildverarbeitungseinrichtüng

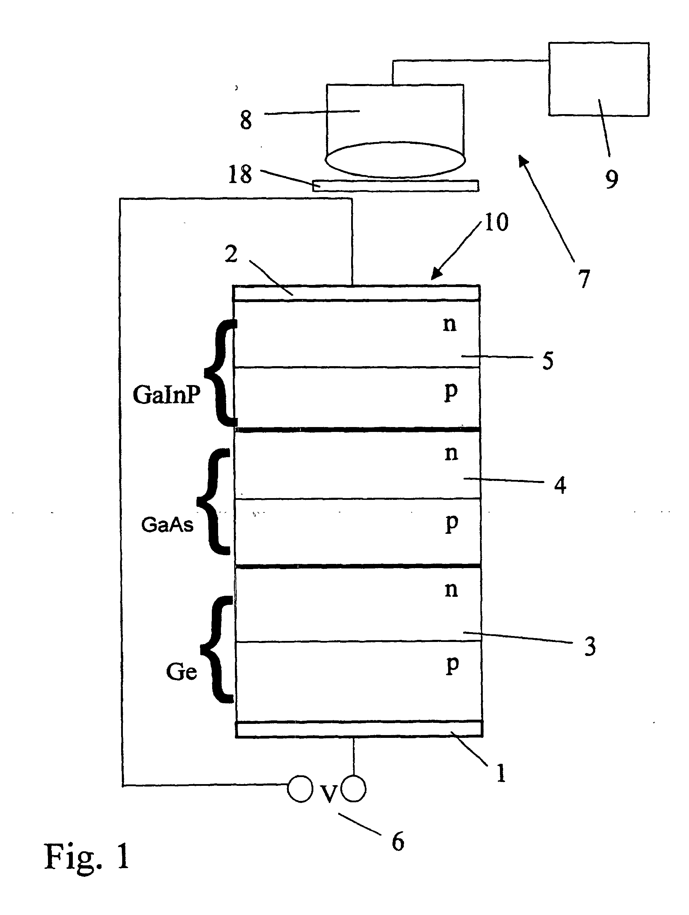

Fig. 1 zeigt schematisch den Aufbau einer Triple Junction Solarzelle als spezielles Beispiel einer Multi Junction Solarzelle. Diese besteht aus einer vertikalen Abfolge von drei Solarzellen 3, 4, 5, die jeweils einen pn-Übergang in vertikaler Richtung beinhalten. Die unterste Solarzelle 3 besteht im Beispiel nach Fig. 1 aus einer Halbleiterschicht aus Germanium, einem Halbleiter mit indirektem Bandübergang, welche zur Ausbildung des pn-Übergangs einen unteren p-dotierten Bereich und einen oberen n-dotierten Bereich aufweist. Die mittere Solarzelle 4 in Fig. 1 besteht aus einer Schicht GaAs, einem Halbleiter mit direktem Bandübergang, und enthält ebenso einen p-dotierten und einen n-dotierten Bereich zur Ausbildung eines vertikalen pn-Überganges. Die obere Solarzelle 5 besteht aus GalnP, ebenfalls einem Halbleiter mit direktem Bandübergang, und enthält ebenso einen p-dotierten und einen n-dotierten Bereich zur Ausbildung eines vertikalen pn-Überganges. Die Solarzellen 4 und 5 können beispielsweise durch epitaktisches Schichtwachstum und geeignete Dotierverfahren auf der unteren Solarzelle 3 erzeugt werden. Die untere Solarzelle 3 kann beispielsweise durch einen dotierten Ge-Wafer gebilet werden. Die Dicken der Halbleiterschichten der Solarzellen 4 und 5 können im Bereich einiger Mikrometer liegen. Zusätzlich zu den in Fig. 1 dargestellten dotierten Halbleiterschichten zur Bildung der pn-Übergänge können zwischen oder angrenzend an diese Schichten noch weitere dotierte oder undotierte Schichten vorgesehen werden, um die Wirkung der pn-Übergänge zu optimieren oder zusätzliche elektische Elemente wie Dioden zwischen den Schichten auszubilden.

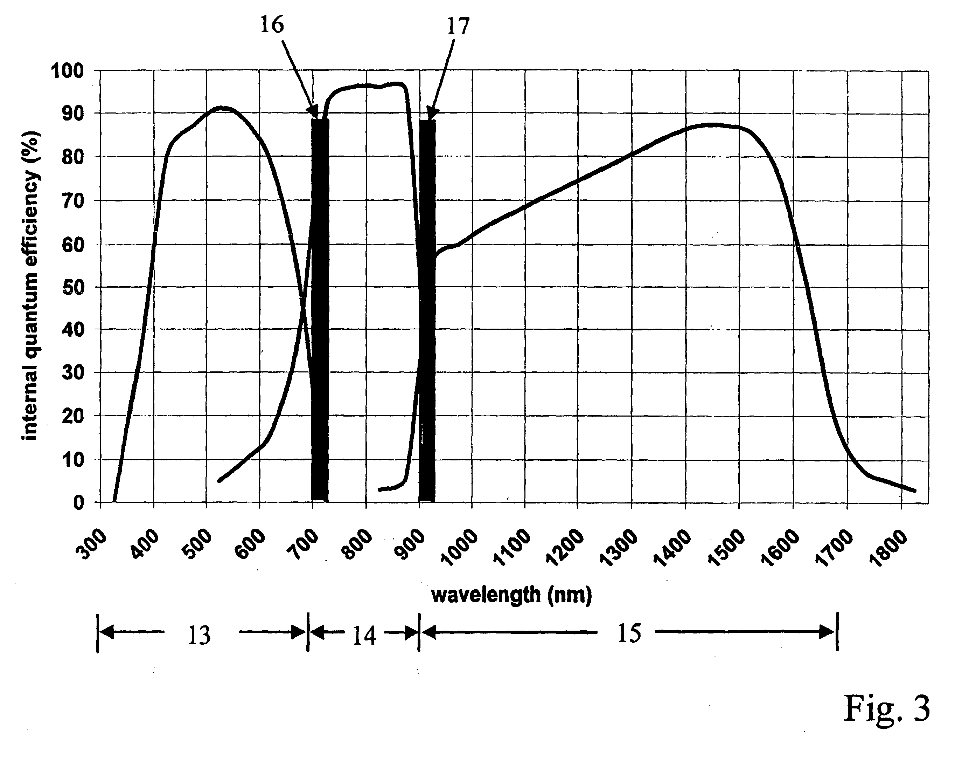

Das Absorptionsverhalten der einzelnen Solarzellen 3, 4, 5 der Triple Junction Solarzelle ist in Fig. 3 schematisch anhand der gegebenen Effektivität der Erzeugung von Ladungsträgern als Funktion der Wellenlänge dargestellt. Die obere Solarzelle 5 absorbiert elektromagnetische Strahlung in einem Wellenlängenbereich 13 von 300 nm bis 700 nm, die mittlere Solarzelle 4 in einem Bereich 14 von 700 nm bis 900 nm und die untere Solarzelle 3 in einem Bereich 15 von 900 nm bis 1700 nm. Dabei entspricht die Energie der jeweilige Grenzwellenlänge 16, 17 der Absorptionsspektren 13, 14 der Solarzellen 4, 5 dem jeweiligen minimalen Bandabstand zwischen Leitungsband und Valenzband des Halbleiters, also in dem Fall der Solarzellen 4, 5 der Energiedifferenz für den direkten Bandübergang.

Für die Ermittlung von Defekten einer Triple Junction Solarzelle nach der vorliegenden Erfindung wird die untere Solarzelle 3 mit einer Elektrode 1 verbunden, die obere Solarzelle 5 mit einer Etektrode 2. An die beiden Elektroden 1, 2 wird nun eine Spannung 6 angelegt, die derart ausgelegt ist, dass alle drei pn-Übergänge, die durch die drei Solarzellen 3, 4, 5 gebildet werden, in Durchlassrichtung betrieben werden. Für den Fall einer Solarzelle nach Fig. 1 liegt diese Spannung im Bereich von einigen Volt. Die Stromstärke kann so eingestellt werden, dass ein ausreichendes Strahlungsverhalten der Solarzellen-Anordnung gegeben ist, eine Zerstörung der Solarzellen-Anordnung durch zu hohe Stromstärken aber ausgeschlossen ist. Es werden durch diese Maßnahmen Ladungsträger (Elektronen und Löcher) in den Halbleiterschichten der Solarzellen 3, 4, 5 induziert. Die Elektronen des Leitungsbandes können in den Halbleiterschichten der Solarzellen 4, 5 aufgrund des vorliegenden direkten Bandüberganges strahlend, also unter Aussendung von Photonen, mit Löchern des Valenzbandes rekombinieren. Die Energie der Photonen entspricht gerade der Bandlücke im Bereich des direkten Bandübergangs, also für die obere Solarzelle 5 einer Wellenlänge 16 von 700 nm (rotes Licht) und für die mittlere Solarzelle 4 einer Wellenlänge 17 von 900 nm (Infrarot). Die untere Solarzelle in Fig. 1 emittiert keine Strahlung, da in Germanium ein indirekter Bandübergang vorliegt, also keine strahlende Rekombination der Ladungsträger möglich ist.

Das Strahlungsverhalten entlang der Oberfläche 10 der gesamten Solarzellen-Anordnung kann nun beispielsweise automatisch durch eine Bildverarbeitungseinrichtung 7 erfasst und analysiert werden. Diese sind grundsätzlich aus dem Stand der Technik bekannt und weisen in der Regel einen optischen Sensor 8 (beispielsweise eine CCD-Kamera) zur Erfassung der Strahlung und eine Verarbeitungseinrichtung 9 zur Signalverarbeitung und Bilderkennung bzw. Bildverarbeitung auf. Diese Einrichtung 7 ist dabei so auszulegen, dass sie die gewünschten Wellenlängen 16, 17 erfassen kann. Gegebenenfalls ist pro Wellenlänge 16, 17 je eine Einrichtung 7 vorzusehen. Um gezielt die Wellenlängen 16, 17 aus der gesamten, die Einrichtung 7 erreichenden Strahlung herauszufiltern, ist idealerweise eine Filtereinrichtung 18 vorzusehen, die im Fall nach Fig. 1 aus je einem Filter pro Wellenlänge 16, 17 bestehen kann.

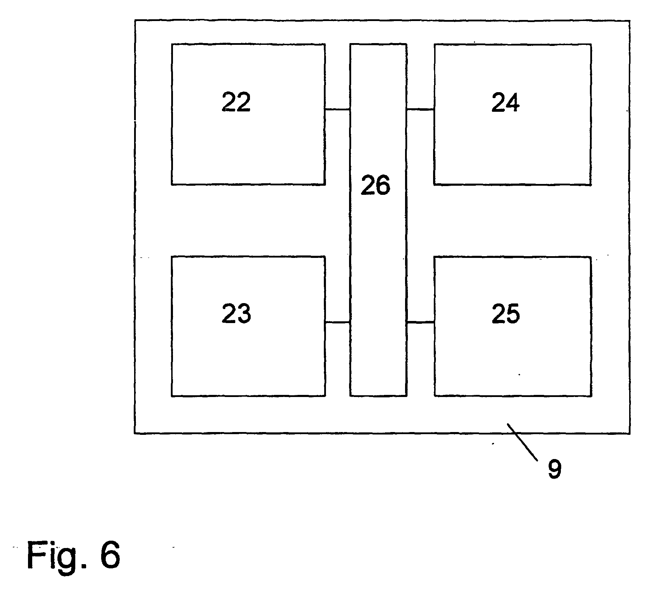

Fig. 6 zeigt schematisch als Blockschaltbild die wesentlichen Funktionalitäten einer mögliche Ausgestaltung der Verarbeitungseinrichtung 9 im Detail. Diese zeigt einen ersten Bilddaten-Speicherbereich 22 zur Speicherung eines Strahlungsbildes einer ersten Halbleiterschicht, einen zweiten Bilddaten-Speicherbereich 23 zur Speicherung eines Strahlungsbildes einer zweiten Halbleiterschicht, einen ersten Programm-Speicherbereich 24 enthaltend ein Bildverarbeitungsprogramm, ausgebildet zur automatischen Untersuchung mindestens eines der Strahlungsbilder auf abrupte, eindimensional ausgedehnte Intensitätsänderungen und zur Kennzeichnung der detektierten Intensitätsänderungen als mechanische Defekte des Halbleiter-Bauelements und einen zweiten Programm-Speicherbereich 25 enthaltend ein Programm zur Analyse mindestens eines der Strahlungsbilder auf elektrische Auswirkungen der mechanischen Defekte. Die beiden Programme können von einer Rechnereinheit 26 ausgeführt werden, die mit den einzelnen Speicherbereichen 22 bis 25 datentechnisch verbunden ist.

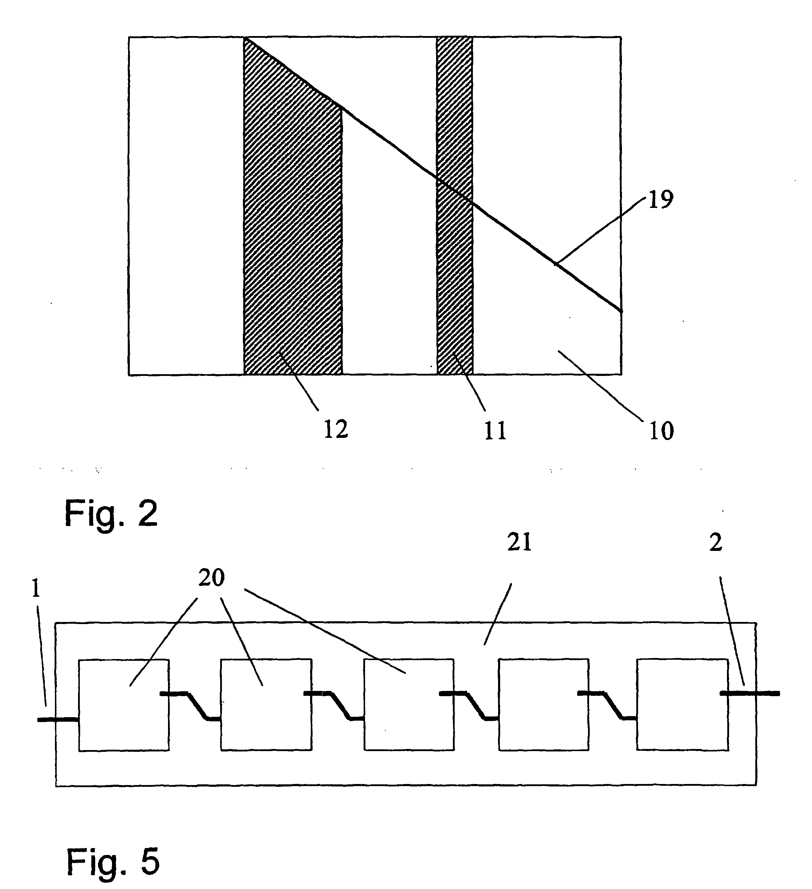

Fig. 2 zeigt nun schematisch ein Bild der Oberfläche 10 der Solarzellen-Anordnung aus Fig. 1 bei angelegter Spannung in Durchlassrichtung. Weite Bereiche der Oberfläche 10 erscheinen durch die abgestrahlten Photonen aus der darunter liegenden Halbleiterschicht der Solarzelle 4 oder 5 (je nach gewähltem Filter 18) als helle Bereiche. Liegen jedoch in den Solarzellen 4, 5 Defekte vor, so werden diese in der Draufsicht auf die Oberfläche 10 durch abrupte Intensitätsänderungen 11, 12, 19 im Strahlungsverhalten detektierbar. So deutet beispielsweise die eindimensionale Intensitätsänderung 19 auf einen Bruch in der entsprechenden Halbleiterschicht hin, also auf einen mechanischen Defekt. Diese abrupten Intensitätsänderungen 11, 12, 19 erlauben sehr leicht ein automatisches Erkennen von Defekten durch geläufige Bildverarbeitungssysteme erlauben. Damit kann aus dem Strahlungsverhalten der Solarzellen-Anordnung, das auf einfache Weise optisch analysiert werden kann, direkt, eindeutig und reproduzierbar auf Defekte in der Solarzellen-Anordnung geschlossen werden.

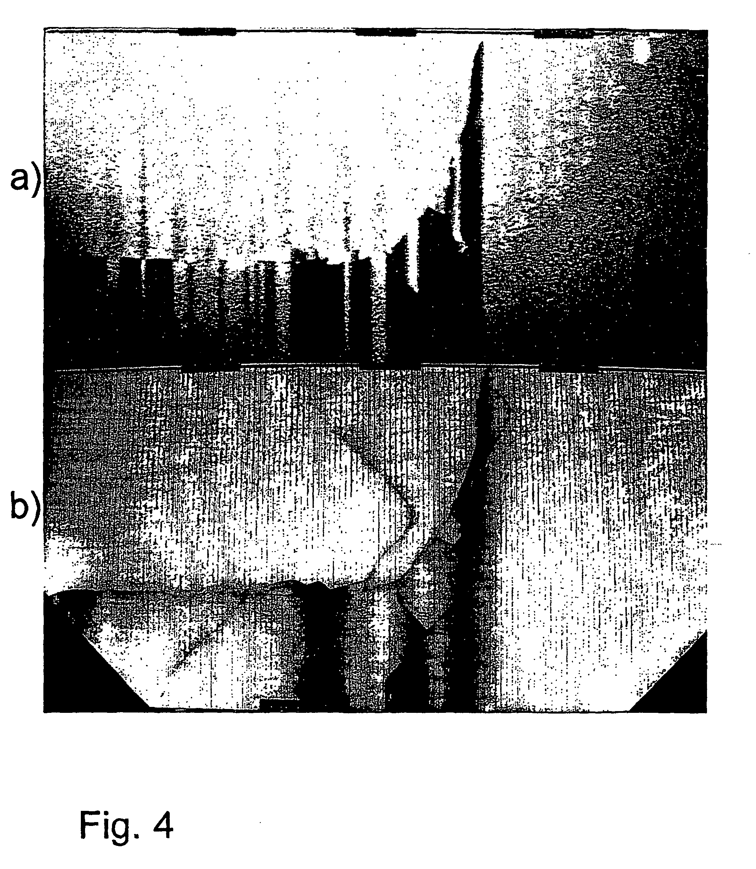

Eine anomale Photonenemission wie in den Bereichen 11, 12 kann sich durch elektrisch inaktive Bereiche oder auch durch Eintrübungen ergeben. Wenn es sich um inaktive Bereiche handelt, so können diese ihre Ursache in mechanischen Defekten haben. Duch das anhand Fig. 4 dargestellte Verfahren können mechanische Defekte detektiert und deren Auswirkungen auf das elektrische Verhalten der Solarzellen-Anordnung bestimmt werden. Dabei wird aus der Gesamtstrahlung durch ein geeignetes erstes Filter 18 die Wellenlänge 17 der Solarzelle 4 im Infrarotbereich herausgefiltert und aus dem Strahlungsbild das Vorliegen mechanischer Defekte wie Brüche detektiert (s. Fig. 4 b). Da alle Schichten der Solarzellen 4, 5 durch epitaktisches Aufwachsen auf den Ge-Wafer mit der Solarzelle 3 erzeugt wurden, kann darauf geschlossen werden, dass entsprechende mechanische Defekte wie Brüche auch in den Solarzellen 3 und 5 vorliegen. Es wird dann aus der Gesamtstrahlung durch ein geeignetes zweites Filter 18 die Wellenlänge 16 der Solarzelle 5 herausgefiltert und das Strahlungsbild detektiert (s. Fig. 4 a). Dieses kann nun analysiert werden und z.B. das Integral über die Gesamtintensität der Strahlung gebildet werden, um die elektrischen Auswirkungen der mechanischen Defekte zu ermitteln.

Das dargestellte Verfahren hat den Vorteil, dass sich auch tiefliegende Defekte ermitteln lassen und nicht nur oberflächliche Defekte wie zum Teil bei den Verfahren nach dem Stand der Technik.

Man erkennt somit über das Strahlungsverhalten sofort Defekte der Solarzellen. Prinzipiell lassen sich die Defekte dadurch klassifizieren, ob sie den pn-Übergang in 0, 1 oder 2 Dimensionen beeinträchtigen. 0-dimensionale Defekte sind punktförmige Defekte, die z.B. zu einer verstärkten Photonenemission an einzelnen Punkten führen ("hot spots"). 1-dimensionale Defekte sind insbesondere Brüche 19, wie auch in Fig. 2 dargestellt, die nicht zwangsläufig zum elektrischen Ausfall größerer Bereiche führen, sondern nur im unmittelbaren Bereich der Bruchlinie 19 einen pn-Übergang stören. Sie sind an einem scharfen Kontrastwechsel optisch zu erkennen. 2-dimensionale Defekte 11, 12 sind durch flächigen Ausfall eines pn-Überganges gekennzeichnet (etwa durch Beschädigung der elektrischen Kontaktierung im Bereich eines Bruches), an deren Kanten ebenfalls ein scharfer Kontrastwechsel auftritt. Es läßt sich sogar direkt aus dem Verhältnis der Flächen der hellen und dunklen Bereiche der Oberfläche 10 zueinander die jeweilige Effizienz der jeweiligen Solarzelle 4, 5 ermitteln und somit quantitativ eine Güte der Solarzellen-Anordnung bestimmen.

Mechanische Defekte in der unteren Solarzelle 3, die im vorliegenden Fall aus Germanium besteht, können zwar nicht durch eine Photonenemission der Ge-Schicht ermittelt werden, da diese selbst keine Photonen emittiert. Da aber die Solarzellen 4 und 5 epitaktisch auf der Solarzelle 3 aufgewachsen sind, beeinflussen mechanische Defekte in der Solarzelle 3 in der Regel auch die Solarzellen 4 und 5, so dass indirekt über das Strahlungsverhalten der Solarzellen 4 und 5 auch Defekte erkennbar werden, die eigentlich von der Solarzelle 3 herrühren.

Fig. 5 zeigt mehrere Solauellen-Anordnungen 20, beispielsweise mehrere Triple Junction Solarzellen-Anordnungen, die zu einem String zusammengefasst warden. Dabei sind die einzelnen Solarzellen-Anordnungen 20 über ihre Elektroden 1, 2 in Serie geschaltet. Die Solarzellen-Anordnungen 20 sind auf einen gemeinsamen Träger 21 aufgebracht. Legt man nun an diesen gesamten String eine Spannung an, die bei n Solarzellen-Anordnungen 20 das n-fache der Spannung beträgt, um eine Solarzellen-Anordnung 20 in Durchlassrichtung zu schalten, so kann der gesamte String von Solarzellen in einem Arbeitsgang getestet werden.

## Patentansprüche

1. Verfahren zur Detektion von Defekten in einem Halbleiter-Bauelement (3, 4, 5, 20) mit zumindest einem pn-Übergang und zumindest einer Halbleiterschicht aus einem Halbleitermaterial mit direktem Bandübergang, wobei an den zumindest einen pn-Übergang eine Spannung zum Betrieb des pn-Überganges in Durchlassrichtung angelegt wird, und das durch die angelegte Spannung erzeugte Strahlungsverhalten der Halbleiterschicht zumindest für Teilbereiche der Halbleiterschicht optisch erfasst und ausgewertet wird, **dadurch gekennzeichnet,**
**dass** das Strahlungsverhalten der Halbleiterschicht automatisch auf abrupte, eindimensional ausgedehnte Intensitätsänderungen (19) längs der Halbleiterschicht untersucht wird und detektierte Intensitätsänderungen (19) als mechanische Defekte des Halbleiter-Bauelements gekennzeichnet werden, und/oder
**dass** automatisch das Integral über die Strahlungsintensität zumindest eines ersten Teilbereichs einer ersten Halbleiterschicht bestimmt wird, anschließend das Integral über die Strahlungsintensität zumindest eines Vergleichsbereichs derselben Halbleiterschicht oder einer zweiten Halbleiterschicht bestimmt wird und aufgrund des Ergebnisses eines automatischen Vergleichs der beiden Integrale der erste Teilbereich als defekt oder als defektfrei gekennzeichnet wird.

2. Verfahren nach Anspruch 1, **dadurch gekennzeichnet, dass** eine indirekte Detektion mechanischer Defekte einer strahlungsinaktiven Schicht des Halbleiter-Bauelements (3) erfolgt, wobei das Strahlungsverhalten einer benachbarten strahlungsaktiven Halbleiterschicht automatisch auf abrupte, eindimensional ausgedehnte Intensitätsänderungen (19) längs der Halbleiterschicht untersucht wird und detektierte Intensitätsänderungen als mechanische Defekte der strahlungsinaktiven Schicht des Halbleiter-Bauelements (3) gekennzeichnet werden.

3. Verfahren nach Anspruch 1 oder 2, **dadurch gekennzeichnet, dass** eine kombinierte Detektion von mechanischen Defekten und Erfassung der elektrischen Auswirkungen der mechanischen Defekte erfolgt, wobei eine Analyse des Strahlungsverhaltens des Bauelements (3, 4, 5, 20) in einem ersten Wellenlängenbereich (17) der Detektion mechanischer Defekte und eine Analyse des Strahlungsverhaltens des Bauelements (3, 4, 5, 20) in einem zweiten Wellenlängenbereich (16) der Erfassung der elektrischen Auswirkungen zu Grunde gelegt wird.

4. Verfahren nach Anspruch 3, **dadurch gekennzeichnet, dass** das Strahlungsverhalten einer ersten Halbleiterschicht mit zumindest einem pn-Übergang zur Detektion mechanischer Defekte und das Strahlungsverhalten einer zweiten Halbleiterschicht mit zumindest einem pn-Übergang zur Erfassung der elektrischen Auswirkungen der mechanischen Defekte verwendet wird, wobei mittels einer Filteranordnung (18) jeweils diejenigen Wellenlängen (16, 17) aus dem Strahlungsspektrum herausgefiltert werden, deren Energie dem direkten Brandübergang der jeweilgen Halbleiterschicht entspricht.

5. Verfahren nach einem der Ansprüche 1 bis 4, **dadurch gekennzeichnet, dass** eine Mehrzahl von n Halbleiter-Bauelementen (20) in einer Serienschaltung auf einem gemeinsamen Bauelemente-Träger (21) angeordnet wird und an die Gesamtheit der Halbleiter-Bauelemente (20) eine Spannung angelegt wird, die dem n-fachen der Spannung zum Betrieb eines Bauelementes (20) in Durchlassrichtung entspricht.

6. Verwendung eines Verfahrens, bei dem
- an zumindest einen pn-Übergang eines Halbleiter-Bauelements (3, 4, 5, 20) eine Spannung zum Betrieb des pn-Überganges in Durchlassrichtung angelegt wird, und
- das durch die angelegte Spannung erzeugte Strahlungsverhalten der Halbleiterschicht zumindest für Teilbereiche der Halbleiterschicht automatisch optisch erfasst und ausgewertet wird,
zur Detektion mechanischer Defekte des Halbleiter-Bauelements (3, 4, 5, 20), **dadurch gekennzeichnet,**
**dass** das Strahlungsverhalten der Halbleiterschicht automatisch auf abrupte, eindimensional ausgedehnte Intensitätsänderungen(19) längs der Halbleiterschicht untersucht wird und detektierte Intensitätsänderungen als mechanische Defekte des Halbleiter-Bauelements (3, 4, 5, 20) gekennzeichnet werden, und/oder
**dass** automatisch das Integral über die Strahlungsintensität zumindest eines ersten Teilbereichs einer ersten Halbleiterschicht bestimmt wird, anschließend das Integral über die Strahlungsintensität zumindest eines Vergleichsbereichs derselben Halbleiterschicht oder einer zweiten Halbleiterschicht bestimmt wird und aufgrund des Ergebnisses eines automatischen Vergleichs der beiden Integrale der erste Teilbereich als defekt oder als defektfrei gekennzeichnet wird.

7. Verwendung nach Anspruch 6, **dadurch gekennzeichnet, dass** eine indirekte Detektion mechanischer Defekte einer strahlungsinaktiven Schicht des Halbleiter-Bauelements (3) erfolgt, wobei das Strahlungsverhalten einer benachbarten strahlungsaktiven Halbleiterschicht automatisch auf abrupte, eindimensional ausgedehnte Intensitätsänderungen (19) längs der Halbleiterschicht untersucht wird und detektierte Intensitätsänderungen als mechanische Defekte der strahlungsinaktiven Schicht des Halbleiter-Bauelements (3) gekennzeichnet werden.

8. Verwendung nach einem der Ansprüche 6 oder 7, **dadurch gekennzeichnet, dass** eine kombinierte Detektion von mechanischen Defekten und Erfassung der elektrischen Auswirkungen der mechanischen Defekte erfolgt, wobei eine Analyse des Strahlungsverhaltens des Bauelements (3, 4, 5, 20) in einem ersten Wellenlängenbereich (17) der Detektion mechanischer Defekte und eine Analyse des Strahlungsverhaltens des Bauelements (3, 4, 5, 20) in einem zweiten Wellenlängenbereich (16) der Erfassung der elektrischen Auswirkungen zu Grunde gelegt wird.

9. Verwendung nach Anspruch 8, **dadurch gekennzeichnet, dass** das Strahlungsverhalten einer ersten Halbleiterschicht mit zumindest einem pn-Übergang zur Detektion mechanischer Defekte und das Strahlungsverhalten einer zweiten Halbleiterschicht mit zumindest einem pn-Übergang zur Erfassung der elektrischen Auswirkungen der mechanischen Defekte verwendet wird, wobei mittels einer Filteranordnung (18) jeweils diejenigen Wellenlängen (16, 17) aus dem Strahlungsspektrum herausgefiltert werden, deren Energie dem direkten Bandübergang der jeweilgen Halbleiterschicht entspricht.

10. Verwendung nach einem der Ansprüche 6 bis 9, **dadurch gekennzeichnet, dass** eine Mehrzahl von n Halbleiter-Bauelementen (20) in einer Serienschaltung auf einem gemeinsamen Bauelemente-Träger (21) angeordnet wird und an die Gesamtheit der Halbleiter-Bauelemente (20) eine Spannung angelegt wird, die dem n-fachen der Spannung zum Betrieb eines Bauelementes (20) in Durchlassrichtung entspricht.

11. Verwendung nach einem der Ansprüche 6 bis 10 zur Detektion mechanischer Defekte von Solarzellen-Anordnungen (20).

12. Anordnung zur Detektion mechanischer Defekte eines Halbleiter-Bauelements (3, 4, 5, 20), insbesondere von Solarzellen-Anordnungen (20), mit zumindest einem pn-Übergang und zumindest einer Halbleiterschicht aus einem Halbleitermaterial mit direktem Bandübergang und mindestens einer Elektrode (1 ), die mit dem p-leitenden Bereich des Halbleiter-Bauelements (3, 4, 5, 20) verbunden ist und mindestens einer Elektrode (2), die mit dem n-leitenden Bereich des Halbleiter-Bauelements (3, 4, 5, 20) verbunden ist, mit:
- einer Spannungsversorgung (6), die mit den Elektroden (1, 2) des Halbleiter-Bauelements (3, 4, 5, 20) verbindbar ist und zum Betrieb des pn-Überganges in Durchlassrichtung ausgelegt ist,
- einer Einrichtung (7) zur optischen Erfassung und Auswertung des durch die angelegte Spannung erzeugte Strahlungsverhalten der Halbleiterschicht zumindest für Teilbereiche der Halbleiterschicht,
**gekennzeichnet durch**
- einen ersten Bilddaten-Speicherbereich (22) zur Speicherung eines Strahlungsbildes einer ersten Halbleiterschicht,
- einen zweiten Bilddaten-Speicherbereich (23) zur Speicherung eines Strahlungsbildes einer zweiten Halbleiterschicht,
- einen ersten Programm-Speicherbereich (24) enthaltend ein Bildverarbeitungsprogramm, ausgebildet zur automatischen Untersuchung mindestens eines der Strahlungsbilder auf abrupte, eindimensional ausgedehnte Intensitätsänderungen (19) und zur Kennzeichnung der detektierten Intensitätsänderungen als mechanische Defekte des Halbleiter-Bauelements und
- einen zweiten Programm-Speicherbereich (25) enthaltend ein Programm zur Analyse mindestens eines der Strahlungsbilder auf elektrische Auswirkungen der mechanischen Defekte.

13. Anordnung nach Anspruch 12, **gekennzeichnet durch** eine Filteranordnung (18) zur Herausfilterung derjenigen Wellenlänge (16, 17) aus dem Strahlungsspektrum, deren Energie dem direkten Bandübergang der Halbleiterschicht entspricht.

14. Anordnung nach Anspruch 12 zur Detektion mechanischer Defekte eines Halbleiter-Bauelements(3, 4, 5,20) mit mehreren pn-Übergängen und zumindest zwei Halbleiterschichten aus verschiedenen Halbleitermaterialien mit direktem Bandübergang, **dadurch gekennzeichnet, dass** jeweils eine Filteranordnung (18) pro Halbleiterschicht mit direktem Bandübergang vorgesehen ist zur Herausfilterung derjenigen Wellenlänge aus dem Strahlungsspektrum, deren Energie dem direkten Bandübergang der jeweiligen Halbleiterschicht entspricht.

## Claims

1. Method for detecting defects in a semiconductor component (3, 4, 5, 20) with at least one p-n junction and at least one semiconductor layer of a semiconductor material with direct band transition, wherein a voltage for driving the p-n junction in the forward direction is applied to the at least one p-n junction, and the radiation response of the semiconductor layer which is produced by the applied voltage is optically detected and evaluated, at least for subregions of the semiconductor layer, **characterised in that**
the radiation response of the semiconductor layer is automatically examined for abrupt, one-dimensionally extended intensity changes (19) along the semiconductor layer and detected intensity changes (19) are characterised as mechanical defects of the semiconductor component, and/or
the integral is automatically determined over the radiation intensity at least of a first subregion of a first semiconductor layer, the integral is then determined over the radiation intensity at least of one comparison region of the same semiconductor layer or a second semiconductor layer, and the first subregion is characterised as defective or as defect-free on the basis of the result of an automatic comparison of the two integrals.

2. Method according to Claim 1, **characterised in that** an indirect detection of mechanical defects of a radiation-inactive layer of the semiconductor component (3) takes place, wherein the radiation response of an adjacent radiation-active semiconductor layer is automatically examined for abrupt, one-dimensionally extended intensity changes (19) along the semiconductor layer and detected intensity changes are characterised as mechanical defects of the radiation-inactive layer of the semiconductor component (3).

3. Method according to Claim 1 or 2, **characterised in that** a combined detection of mechanical defects and detection of the electrical effects of the mechanical defects takes place, wherein an analysis of the radiation response of the component (3, 4, 5, 20) in a first wavelength range (17) is taken as a basis for the detection of mechanical defects and an analysis of the radiation response of the component (3, 4, 5, 20) in a second wavelength range (16) is taken as a basis for the detection of the electrical effects.

4. Method according to Claim 3, **characterised in that** the radiation response of a first semiconductor layer with at least one p-n junction is used to detect mechanical defects and the radiation response of a second semiconductor layer with at least one p-n junction is used to detect the electrical effects of the mechanical defects, wherein those wavelengths (16, 17) whose energy corresponds to the direct band transition of the respective semiconductor layer are in each case filtered out of the radiation spectrum by means of a filter arrangement (18).

5. Method according to any one of Claims 1 to 4, **characterised in that** a plurality of n semiconductor components (20) are disposed in a series connection on a common component support (21) and a voltage which corresponds to n times the voltage for driving a component (20) in the forward direction is applied to all the semiconductor components (20).

6. Use of a method in which
- a voltage for driving the p-n junction in the forward direction is applied to at least one p-n junction of a semiconductor component (3, 4, 5, 20), and
- the radiation response of the semiconductor layer which is produced by the applied voltage is automatically optically detected and evaluated, at least for subregions of the semiconductor layer,
for detecting mechanical defects of the semiconductor component (3, 4, 5, 20), **characterised in that**
the radiation response of the semiconductor layer is automatically examined for abrupt, one-dimensionally extended intensity changes (19) along the semiconductor layer and detected intensity changes are characterised as mechanical defects of the semiconductor component (3, 4, 5, 20), and/or
the integral is automatically determined via the radiation intensity at least of a first subregion of a first semiconductor layer, the integral is then determined via the radiation intensity at least of one comparison region of the same semiconductor layer or a second semiconductor layer, and the first subregion is characterised as defective or as defect-free on the basis of the result of an automatic comparison of the two integrals.

7. Use according to Claim 6, **characterised in that** an indirect detection of mechanical defects of a radiation-inactive layer of the semiconductor component (3) takes place, wherein the radiation response of an adjacent radiation-active semiconductor layer is automatically examined for abrupt, one-dimensionally extended intensity changes (19) along the semiconductor layer and detected intensity changes are characterised as mechanical defects of the radiation-inactive layer of the semiconductor component (3).

8. Use according to either of Claims 6 and 7, **characterised in that** a combined detection of mechanical defects and detection of the electrical effects of the mechanical defects takes place, wherein an analysis of the radiation response of the component (3, 4, 5, 20) in a first wavelength range (17) is taken as a basis for the detection of mechanical defects and an analysis of the radiation response of the component (3, 4, 5, 20) in a second wavelength range (16) is taken as a basis for the detection of the electrical effects.

9. Use according to Claim 8, **characterised in that** the radiation response of a first semiconductor layer with at least one p-n junction is used to detect mechanical defects and the radiation response of a second semiconductor layer with at least one p-n junction is used to detect the electrical effects of the mechanical defects, wherein those wavelengths (16, 17) whose energy corresponds to the direct band transition of the respective semiconductor layer are in each case filtered out of the radiation spectrum by means of a filter arrangement (18).

10. Use according to any one of Claims 6 to 9, **characterised in that** a plurality of n semiconductor components (20) are disposed in a series connection on a common component support (21) and a voltage which corresponds to n times the voltage for driving a component (20) in the forward direction is applied to all the semiconductor components (20).

11. Use according to any one of Claims 6 to 10 for detecting mechanical defects of solar cell arrangements (20).

12. Arrangement for detecting mechanical defects of a semiconductor component (3, 4, 5, 20), in particular of solar cell arrangements (20), with at least one p-n junction and at least one semiconductor layer of a semiconductor material with direct band transition and at least one electrode (1) which is connected to the p-type region of the semiconductor component (3, 4, 5, 20) and at least one electrode (2) which is connected to the n-type region of the semiconductor component (3, 4, 5, 20), with:
- a voltage supply (6) which can be connected to the electrodes (1, 2) of the semiconductor component (3, 4, 5, 20) and is designed to drive the p-n junction in the forward direction,
- a device (7) for optically detecting and evaluating the radiation response of the semiconductor layer which is produced by the applied voltage, at least for subregions of the semiconductor layer,
**characterised by**
- a first image data storage region (22) for storing a radiation image of a first semiconductor layer,
- a second image data storage region (23) for storing a radiation image of a second semiconductor layer,
- a first program storage region (24) containing an image processing program, developed for automatically examining at least one of the radiation images for abrupt, one-dimensionally extended intensity changes (19) and for characterising the detected intensity changes as mechanical defects of the semiconductor component and
- a second program storage region (25) containing a program for analysing at least one of the radiation images for electrical effects of the mechanical defects.

13. Arrangement according to Claim 12, **characterised by** a filter arrangement (18) for filtering that wavelength (16, 17) whose energy corresponds to the direct band transition of the semiconductor layer out of the radiation spectrum.

14. Arrangement according to Claim 12 for detecting mechanical defects of a semiconductor component (3, 4, 5, 20) with a plurality of p-n junctions and at least two semiconductor layers of different semiconductor materials with direct band transition, **characterised in that** a respective filter arrangement (18) is provided per semiconductor layer with direct band transition for filtering that wavelength whose energy corresponds to the direct band transition of the respective semiconductor layer out of the radiation spectrum.

## Revendications

1. Procédé de détection de défauts dans un composant à semi-conducteurs (3, 4, 5, 20) comprenant au moins une jonction p-n et au moins une couche semi-conductrice en un matériau semi-conducteur à passage de bande direct, une tension pour le fonctionnement de la jonction p-n dans le sens passant étant appliquée à la au moins une jonction p-n, et le comportement de rayonnement de la couche semi-conductrice produit par la tension appliquée étant optiquement acquis et analysé au moins pour des zones-partielles de la couche semi-conductrice, **caractérisé en ce**
**que** le comportement de rayonnement de la couche semi-conductrice est évalué automatiquement quant à d'abruptes variations d'intensité (19) unidimensionnelles le long de la couche semi-conductrice et des variations d'intensité (19) détectées sont caractérisées en tant que défauts mécaniques du composant à semi-conducteurs, et/ou
**que** l'intégrale sur l'intensité de rayonnement d'au moins une première zone partielle d'une première couche semi-conductrice est déterminée automatiquement, puis l'intégrale sur l'intensité de rayonnement d'au moins une zone de comparaison de la même couche semi-conductrice ou d'une seconde couche semi-conductrice est déterminée, et la première zone partielle est caractérisée comme défectueuse ou sans défauts sur la base du résultat d'une comparaison automatique des deux intégrales.

2. Procédé suivant la revendication 1, **caractérisé en ce qu'**une détection indirecte de défauts mécaniques d'une couche inactive au rayonnement du composant à semi-conducteurs (3) est effectuée, le comportement de rayonnement d'une couche semi-conductrice voisine active au rayonnement étant évalué automatiquement quant à d'abruptes variations d'intensité (19) unidimensionnelles le long de la couche semi-conductrice, et des variations d'intensité détectées étant caractérisées en tant que défauts mécaniques de la couche inactive au rayonnement du composant à semi-conducteurs (3).

3. Procédé suivant l'une des revendications 1 et 2, **caractérisé en ce qu'**une combinaison de détection de défauts mécaniques et d'acquisition des effets électriques des défauts mécaniques est effectuée, une analyse du comportement de rayonnement du composant (3, 4, 5, 20) dans un premier domaine de longueurs d'ondes (17) étant basée sur la détection de défauts mécaniques et une analyse du comportement de rayonnement du composant (3, 4, 5, 20) dans un second domaine de longueurs d'ondes (16) sur l'acquisition des effets électriques.

4. Procédé suivant la revendication 3, **caractérisé en ce que** le comportement de rayonnement d'une première couche semi-conductrice comprenant au moins une jonction p-n est utilisé pour la détection de défauts mécaniques et le comportement de rayonnement d'une deuxième couche semi-conductrice comprenant au moins une jonction p-n est utilisé pour l'acquisition des effets électriques des défauts mécaniques, la longueur d'onde (16, 17) dont l'énergie correspond au passage de bande direct de chaque couche semi-conductrice étant filtrée du spectre de rayonnement au moyen d'un agencement de filtres (18).

5. Procédé suivant l'une des revendications 1 à 4, **caractérisé en ce qu'**une pluralité de n composants à semi-conducteurs (20) est montée en série sur un support de composants commun (21) et une tension qui correspond à n fois la tension pour le fonctionnement d'un composant (20) dans le sens passant est appliquée à la totalité des composants à semi-conducteurs (20).

6. Utilisation d'un procédé dans lequel
- une tension pour le fonctionnement de la jonction dans le sens passant est appliquée à au moins une jonction p-n d'un composant à semi-conducteurs (3, 4, 5, 20), et
- le comportement de rayonnement de la couche semi-conductrice produit par la tension appliquée est acquis et analysé optiquement de façon automatique au moins pour des zones partielles de la couche semi-conductrice,
pour la détection de défauts mécaniques du composant à semi-conducteurs (3, 4, 5, 20), **caractérisée en ce**
**que** le comportement de rayonnement de la couche semi-conductrice est évalué automatiquement quant à d'abruptes variations d'intensité unidimensionnelles (19) le long de la couche semi-conductrice et des variations d'intensité détectées sont caractérisées en tant que défauts mécaniques du composant à semi-conducteurs (3, 4, 5, 20), et/ou
**que** l'intégrale sur l'intensité de rayonnement d'au moins une première zone partielle d'une première couche semi-conductrice est déterminée automatiquement, puis l'intégrale sur l'intensité de rayonnement d'au moins une zone de comparaison de la même couche ou d'une seconde couche semi-conductrice est déterminée, et la première zone partielle est caractérisée comme défectueuse ou sans défauts sur la base du résultat d'une comparaison automatique des deux intégrales.

7. Utilisation suivant la revendication 6, **caractérisée en ce qu'**une détection indirecte de défauts mécaniques d'une couche inactive au rayonnement du composant à semi-conducteurs (3) est effectuée, le comportement de rayonnement d'une couche semi-conductrice voisine active au rayonnement étant évalué automatiquement quant à d'abruptes variations d'intensité unidimensionnelles (19) le long de la couche semi-conductrice et des variations d'intensité détectées étant caractérisées en tant que défauts mécaniques de la couche inactive au rayonnement du composant à semi-conducteurs (3).

8. Utilisation suivant l'une des revendications 6 et 7, **caractérisée en ce qu'**une combinaison de détection de défauts mécaniques et d'acquisition des effets électriques des défauts mécaniques est effectuée, une analyse du comportement de rayonnement du composant (3, 4, 5, 20) dans un premier domaine de longueurs d'ondes (17) étant basée sur la détection de défauts mécaniques et une analyse du comportement de rayonnement du composant (3, 4, 5, 20) dans un second domaine de longueurs d'ondes (16) sur l'acquisition des effets électriques.

9. Utilisation suivant la revendication 8, **caractérisée en ce que** le comportement de rayonnement d'une première couche semi-conductrice comprenant au moins une jonction p-n est utilisé pour la détection de défauts mécaniques et le comportement de rayonnement d'une deuxième couche semi-conductrice comprenant au moins une jonction p-n est utilisé pour l'acquisition des effets électriques des défauts mécaniques, la longueur d'onde (16, 17) dont l'énergie correspond au passage de bande direct de chaque couche semi-conductrice étant filtrée du spectre de rayonnement au moyen d'un agencement de filtres (18).

10. Utilisation suivant l'une des revendications 6 à 9, **caractérisée en ce qu**'une pluralité de n composants à semi-conducteurs (20) est montée en série sur un support de composants commun (21) et une tension qui correspond à n fois la tension pour le fonctionnement d'un composant (20) dans le sens passant est appliquée à la totalité des composants à semi-conducteurs (20).

11. Utilisation suivant l'une des revendications 6 à 10 pour la détection de défauts mécaniques d'agencements de cellules solaires (20).

12. Dispositif pour la détection de défauts mécaniques d'un composant à semi-conducteurs (3, 4, 5, 20), en particulier d'agencements de cellules solaires (20), comprenant au moins une jonction p-n et au moins une couche semi-conductrice en un matériau semi-conducteur à passage de bande direct et au moins une électrode (1) qui est reliée à la zone de conductivité p du composant à semi-conducteurs (3, 4, 5, 20), et au moins une électrode (2) qui est reliée à la zone de conductivité n du composant à semi-conducteurs (3, 4, 5, 20), comprenant :
- une alimentation en tension (6) qui peut être raccordée aux électrodes (1, 2) du composant à semi-conducteurs (3, 4, 5, 20) et conçue pour le fonctionnement de la jonction p-n dans le sens passant,
- un équipement (7) pour l'acquisition et l'analyse optiques du comportement de rayonnement de la couche semi-conductrice produit par la tension appliquée, au moins pour des zones partielles de la couche,
**caractérisé par**
- une première zone de stockage de données-image (22) pour le stockage d'une image de rayonnement d'une première couche semi-conductrice,
- une seconde zone de stockage de données-image (23) pour le stockage d'une image de rayonnement d'une deuxième couche semi-conductrice,
- une première zone de stockage de programme (24) contenant un programme de traitement d'images configuré pour l'évaluation automatique d'au moins l'une des images de rayonnement quant à d'abruptes variations d'intensité unidimensionnelles (19) et pour la caractérisation des variations d'intensité détectées en tant que défauts mécaniques du composant à semi-conducteurs et
- une seconde zone de stockage de programme (25) contenant un programme pour l'analyse d'au moins l'une des images de rayonnement quant à des effets électriques des défauts mécaniques.

13. dispositif suivant la revendication 12, **caractérisé par** un agencement de filtres (18) pour filtrer du spectre de rayonnement la longueur d'onde (16, 17) dont l'énergie correspond au passage de bande direct de la couche semi-conductrice.

14. Dispositif suivant la revendication 12 pour la détection de défauts mécaniques d'un composant à semi-conducteurs (3, 4, 5, 20) comprenant plusieurs jonctions p-n et au moins deux couches semi-conductrices en matériaux semi-conducteurs différents à passage de bande direct, **caractérisé en ce qu'**un agencement de filtres (18) est prévu pour chaque couche semi-conductrice à passage de bande direct pour filtrer du spectre de rayonnement la longueur d'onde dont l'énergie correspond au passage de bande direct de la couche semi-conductrice.
